# EUROPÄISCHE PATENTSCHRIFT

(11) **EP 1 673 549 B1**
(45) Veröffentlichungstag und Bekanntmachung des Hinweises auf die Patenterteilung: **09.01.2008**
(21) Anmeldenummer: 04790195.4
(22) Anmeldetag: 08.10.2004
(51) Int. Cl.: F16D 65/56, F16D 65/38

(54) **SCHEIBENBREMSE MIT ELEKTROMOTORISCH ANGETRIEBENER NACHSTELLVORRICHTUNG**
DISK BRAKE COMPRISING AN ADJUSTING DEVICE DRIVEN IN AN ELECTROMOTIVE MANNER
FREIN A DISQUE COMPORTANT UN DISPOSITIF DE RATTRAPAGE DE JEU ENTRAINE PAR UN MOTEUR ELECTRIQUE

(30) Priorität: 10.10.2003 DE 10347116
(43) Veröffentlichungstag der Anmeldung: 28.06.2006
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); GANZHORN, Dirk, 81543 München (DE)
(74) Vertreter: Mattusch, Gundula
(86) Internationale Anmeldenummer: PCT/EP2004/011245
(87) Internationale Veröffentlichungsnummer: WO 2005/036012

(56) Entgegenhaltungen:
- DE-A- 10 305 702
- PATENT ABSTRACTS OF JAPAN Bd. 1997, Nr. 03, 31. März 1997 (1997-03-31) & JP 08 312701 A (AKEBONO BRAKE RES & DEV CENTER), 26. November 1996 (1996-11-26)

## Beschreibung

Die vorliegende Erfindung betrifft eine Scheibenbremse insbesondere für Nutzfahrzeuge nach dem Oberbegriff des Anspruches 1.

In der EP 0 995 923 ist eine Scheibenbremse mit einem elektrisch angetriebenen Verschleißnachstellsystem offenbart, bei welchem der antreibende Elektromotor vollständig im Inneren des Bremsgehäuses aufgenommen ist. Dadurch kann zwar der Elektromotor zweckmäßig mit einem Transmissionsgetriebe zusammengefasst werden, allerdings gestaltet sich die Installation des Elektromotors mit der notwendigen elektrischen Verkabelung inmitten der bewegten Bauteile der Bremsmechanik jedoch sehr aufwendig und ist relativ störanfällig. Für Service und Reparaturzwecke ist dieser Elektromotor praktisch nicht mehr zugänglich, da zum Austausch die vollständige Zerlegung der Bremse notwendig ist.

In der nachveröffentlichten Druckschrift DE 103 05 702 ist eine Scheibenbremse gezeigt, welche bereits eine verbesserte Installation des elektrischen Antriebes zeigt. Bei dieser Lösung ist der Elektromotor und die elektronische Steuerung in einem Deckel zu einer Baueinheit zusammengefasst und von außen an das Bremsengehäuse angeschraubt. Die Abtriebswelle des Motors ragt ins Bremsengehäuse hinein und greift dort in eine Steckkupplung, welche wiederum mit dem im Inneren des Bremsengehäuses angeordneten Transmissionsgetriebe im Sinne der Übertragung von definierten Drehbewegungen und Drehkräften im Eingriff steht. Die elektrische Verkabelung ist bei dieser Lösung bereits vorteilhaft von außen an den Deckel herangeführt und die ganze Antriebseinheit ist durch Lösen weniger Schrauben vom Bremsengehäuse entfernbar und somit für Service- und Reparaturzwecke auf einfache Weise zugänglich. Allerdings gestaltet sich auch bei dieser Lösung das "Einfädeln" der Kupplung des Elektromotors bereits bei der Erstmontage und insbesondere auch im Service- und Reparaturfall relativ schwierig, da das Finden des Formschlusses der Kupplung im Inneren des Bremsengehäuses "blind" erfolgen muss und eine hohe Sensibilität der die Montage ausführenden Person erfordert. Es besteht somit die Gefahr, dass die Kupplung nicht richtig in Eingriff gebracht wird und gegebenenfalls sogar Bauteile des elektrischen Antriebes oder des Transmissionsgetriebes beschädigt werden.

Die JP 08312701 zeigt eine Scheibenbremse, bei der eine über einen Motor angetriebene Nachstellvorrichtung für eine konstantes Lüftspiel vorgesehen ist. Zwischen dem Motor und der Nachstellvorrichtung ist dabei eine Spiralfeder angeordnet.

Es ist daher Aufgabe der vorliegenden Erfindung eine Scheibenbremse mit elektromotorisch angetriebener Nachstellvorrichtung zu schaffen, die einfach zu montieren ist und mit der auf einfache Weise ein Nachstellen der Bremse erfolgen kann.

Diese Aufgabe wird mit einer Scheibenbremse mit den Merkmalen des Anspruches 1 gelöst.

Erfindungsgemäß ist zwischen dem Antrieb und der Nachstellvorrichtung eine drehmomentübertragende axial federelastische Kupplung geschaltet. Dadurch lässt sich die Kupplung an der Scheibenbremse montieren, ohne das eine vollkommen exakte Ausrichtung der Bauteile zur Übertragung des Drehmomentes vorliegen muss. Daher kann bei der Montage eine gewisse Toleranz genutzt werden, um die Bauteile zusammenzusetzen, ohne dass eine Winkelausrichtung schon exakt erfolgt sein muss. Damit auf einfache Weise ein Einrasten der Kupplung erreicht wird, ist die Kupplung mittels einer Feder gegen den Antrieb vorgespannt. Somit wird verhindert, dass die Kupplung versehentlich dauerhaft im Leerlauf betrieben wird.

Vorzugsweise sind im Kraftübertragungsweg zwischen Antrieb und Nachstellvorrichtung Mitnahmeelemente angeordnet, mittels denen ein Drehmoment übertragbar ist. Diese Mitnahmeelemente können dann in beliebiger Winkelposition montiert werden, und greifen dann bei Bedarf in korrespondierende Mitnahmeelemente ein, um ein Drehmoment zu übertragen. Dies ermöglicht bei der Montage eine völlig freie Wahl der Ausrichtung der sich drehenden Bauteile. Diese Mitnahmeelemente können integral an der Kupplung ausgebildet sein, sodass mittels der Mitnahmeelemente nach der Montage ein Einkuppeln erfolgen kann.

Die Kupplung weist zur Übertragung des Drehmomentes mindestens einen sich in radiale Richtung erstreckenden Arm auf, der am Antrieb festlegbar ist und weist ferner über ein Getriebe mit der Nachstellvorrichtung gekoppelte Drehachse auf. Die Kupplung bildet somit ein Überbrückungsglied zwischen Antrieb und Nachstellvorrichtung, wobei vor oder nach der Kupplung ein Getriebe geschaltet sein kann. Für einen einfachen Aufbau der Kupplung ist an dem mindestens einen Arm ein Vorsprung ausgebildet, der in einen am Antrieb ausgebildeten Schlitz einfügbar ist. Dadurch kann die Kupplung auf einfache Weise verrasten und das erforderliche Drehmoment übertragen.

Für eine einfache Herstellung ist die Kupplung im wesentlichen plattenförmig mit mehreren sich radial erstreckenden Armen ausgebildet und kann somit aus einem Blechteil gestanzt und gebogen werden.

Die Kupplung ist vorzugsweise direkt an einem Rotor des Antriebes festgelegt. Dabei können an den Armen der Kupplung ausgebildete Vorsprünge in am Rotor ausgebildete Schlitze oder Vertiefungen eingefügt werden, sodass die Kupplung spätestens bei einem ersten Drehen direkt am Rotor einrastet.

Für die Übertragung größerer Drehmomente kann die Kupplung eine verstärkte Aufnahme für eine mit der Nachstellvorrichtung gekoppelte Welle aufweisen.

Die Erfindung wird nachfolgend anhand von mehreren Ausführungsbeispielen mit Bezug auf die beigefügten Zeichnungen näher erläutert. Es zeigen:
- Figur 1: einen Schnitt durch eine Scheibenbremse mit einer Nachstellvorrichtung;
- Figur 2: eine perspektivische Ansicht der Bauteile einer erfindungsgemäßen Nachstellvorrichtung für eine Scheibenbremse;
- Figur 3: eine perspektivische Ansicht der Bauteile der Nachstellvorrichtung in einer Explosionsdarstellung;
- Figur 4A und 4B: perspektivische Ansichten einer erfindungsgemäßen Kupplung;
- Figur 5: eine perspektivische Ansicht der Kupplung der Figur 4 nach der Montage am Getriebe;
- Figur 6: eine perspektivische Ansicht eines zweiten Ausführungsbeispiels einer montierten Kupplung am Getriebe;
- Figur 7: eine perspektivische Ansicht der am Antrieb montierten Kupplung der Figur 6;
- Figur 8: eine perspektivische Ansicht der Kupplung der Figuren 6 und 7;
- Figur 9: eine perspektivische Ansicht eines weiteren Ausführungsbeispiels einer Kupplung, und
- Figur 10: eine perspektivische Ansicht eines weiteren Ausführungsbeispiels einer Kupplung.

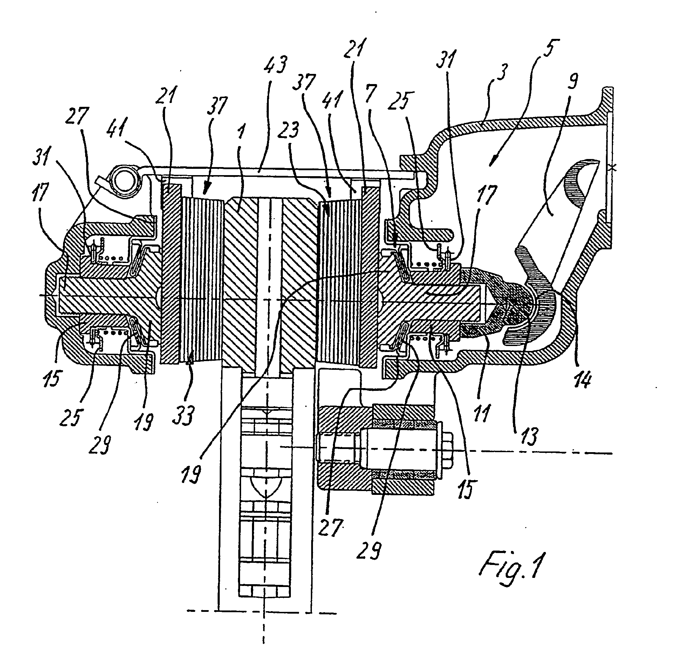

Zunächst wird mit Bezug auf Figur 1 der Aufbau und die Wirkungsweise einer Nachstellvorrichtung für eine Scheibenbremse erläutert. Es ist eine Schiebesattel-Scheibenbremse gezeigt, die hier einen einteiligen eine Bremsscheibe 1 übergreifenden Bremssattel 3 aufweist. Die Erfindung ist jedoch auch bei anderen Scheibenbremsbauarten, wie einer Schiebe- oder Festsattelbremse einsetzbar. Der Bremssattel 3 kann auch mehrteilig ausgebildet sein, wobei die Bremssattelteile dann aneinander montiert sind.

Auf der einen Seite der Bremsscheibe 1 ist im Bremssattel 3 eine Zuspannvorrichtung 5 angeordnet, welche durch eine zur Bremsscheibe hinweisende Öffnung 7 des Bremssattels 3 einsetzbar ist. Die Zuspannvorrichtung 5 weist einen von einer nicht dargestellten Kolbenstange betätigbaren Drehhebel 9 auf, welche über hier nicht erkennbare Lagerelemente wie Kugeln oder zusätzliche Lagerschalen am Bremssattel 3 abgestützt ist.

Der Drehhebel 9 wirkt an seiner vom Bremssattel 3 abgewandten Seite an einer mittigen Stelle oder vorzugsweise an zwei seitlichen Enden jeweils auf ein Zwischenelement 11 ein, welches an seinem dem Drehhebel 9 zugewandten Ende einen halbkugelartigen Ansatz 13 aufweist. Zwischen dem Ansatz 13 und dem Drehhebel 9 ist hier eine Gleitlagerschale 14 angeordnet.

Das Zwischenelement 11 stützt sich an der Stirnseite einer Nachstellmutter 15 ab, in die eine Stellspindel 17 eingesetzt, insbesondere eingeschraubt ist, die an ihrem vom Drehhebel 1 abgewandten Ende ein Druckstück 19 trägt, welche an einer Belaghalteplatte 21 eines zuspannseitigen Bremsbelages 23 anliegt.

Wird der Drehhebel 9 durch Vorschieben der Kolbenstange verschwenkt, bewirkt das untere exzenterartige Ende (hier nicht zu erkennen) des Drehhebels 9 ein Vorschieben des Zwischenelementes 11 in Richtung der Bremsscheibe 1. Dabei werden die Nachstellmutter 15 und die Stellspindel 17 mit in Richtung des Bremsbelages 23 gedrückt und der zuspannseitige Bremsbelag 23 in Richtung der Bremsscheibe 1 verschoben. Die Nachstellmutter 15 und die Stellspindel 17 sind in zwei Halteplatten 25, 27 eingesetzt. Eine faltenbalgartige Dichtung 29 dichtet den Raum zwischen der einen Halteplatte 25 und dem Druckstück gegen ein Eindringen von Schmutz und Feuchtigkeit ab.

Auf der Nachstellmutter 15 ist ein Zahnrad 31 relativ zu der Nachstellmutter 15 unverdrehbar befestigt. Das Zahnrad 31 kann über weitere Getriebeglieder wie weitere Zahnräder insbesondere von einem hier nicht dargestellten Elektromotor betätigt werden, um den durch Bremsungen verursachten Bremsbelagverschleiß auszugleichen.

Wird die Nachstellmutter 15 verdreht, wird die Stellspindel 17 relativ zur Nachstellmutter 15 axial bewegt und damit das Lüftspiel zwischen Bremsbelag 23 und Bremsscheibe 1 verändert. Alternativ ist auch eine Betätigung über eine zwischen Drehhebel 9 und Nachstellmutter 15 geschaltete Koppelmechanik denkbar (hier nicht dargestellt). Bevorzugt sind zwei der Nachstelldrehantriebe aus Nachstellmutter 15 und Stellspindel 17 auf der Seite der Zuspannvorrichtung 5 nebeneinander angeordnet, sodass der Bremsbelag 23 an zwei Stellen mit Druck beaufschlagt wird.

Ein oder zwei weitere Nachstelldrehantriebe mit einem vorzugsweise eigenen elektromotorischen Antrieb sind auf der von der Zuspannvorrichtung 5 abgewandten Seite der Bremsscheibe 1- der Reaktionsseite - im Bremssattel 2 angeordnet.
Auch diese Nachstelldrehantriebe weisen jeweils eine Nachstellmutter 15 und eine Stellspindel 17 auf, die es ermöglichen, das Druckstück 19 in Richtung des auf der Reaktionsseite der Bremsscheibe 1 angeordneten Bremsbelages 33 in Richtung der Bremsscheibe 1 zu verschieben.

Die Einstellung des Lüftspiels erfolgt vorzugsweise rechnergesteuert ausschließlich mit einer direkt in die Scheibenbremse integrierten Steuerungseinrichtung, wobei ein Nachstellvorgang nach jeder Bremsbetätigung, nach einer vorgegebenen Anzahl von Bremsbetätigungen, nach einer vorgegebenen Bremsdauer oder in vorgegebenen Zeitabständen erfolgen kann.

Da auf jeder Stirnseite der Bremsscheibe 1 jeweils wenigstens eine eigene Nachstellvorrichtung - hier jeweils bestehend aus zwei Nachstelldrehantrieben mit e-lektromotorischem Antrieb - angeordnet ist, ist es möglich, den Bremssattel 3 hier als einen Schiebe- oder Schwenksattel auszubilden, dessen Schiebeweg oder Schwenkwinkel derart bemessen ist, dass mit ihm weniger als der maximale Nachstellweg, insbesondere sogar lediglich der maximale Arbeitshub beim Zuspannen der Bremse überbrückbar ist.

Zu diesem Zweck ist der Bremssattel 3 an einer Radachse oder -nabe relativ zu dieser an einem elastischen Lager verschwenk- oder verschiebbar befestigt. Ergänzend kann auch die Bremsscheibe 1 verschieblich an der Radachse oder -nabe befestigt sein. Da der zu überbrückender Verschiebeweg oder Verschwenkwinkel kleiner als der Verschiebeweg oder der Verschwenkwinkel ist, den ein vergleichbarer Bremssattel nach dem Stand der Technik überbrücken musste, bei dem nur auf einer Seite der Bremsscheibe 1 eine Nachstellvorrichtung angeordnet war, ergibt sich die überraschende Möglichkeit dazu, die Verschiebbarkeit oder die Verschwenkbarkeit durch eine elastische Anbindung zwischen dem Bremssattel und der Radnabe oder -achse zu realisieren.

Das elastische Lager ist hier parallel zur Bremsscheiben-Symmetrieachse angeordnet, d.h. es findet im wesentlichen keine Schwenkbewegung um eine Lagerdrehachse statt, sondern eine elastische Längsverschiebbarkeit des Sattels mit einer elastischen Schwenkbarkeit quer zur Längsachse der hier als Lager vorgesehenen Ultrabuchse. Hierbei wird die Bewegung des Bremssattels zum Ausgleich der Elastizität nicht ausschließlich als Schwenkbewegung ausgeführt, wodurch insbesondere Anpassungsbremsungen mit nahezu reiner Längsverschiebung des Bremssattels ausgeführt werden und nur die selten auftretenden Bremsungen mit hohen Bremskräften das Verschwenken des Bremssattels erfordern. Alternativ können auch zwei Lager mit Schwenkachsen parallel zur Scheibendrehachse vorgesehen sein (hier nicht dargestellt).

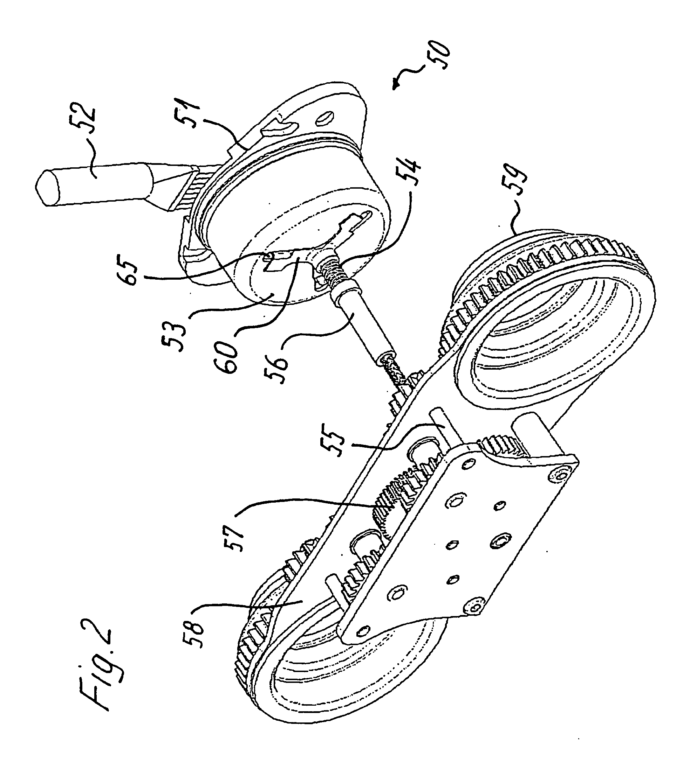

In Figur 2 sind die relevanten Bauteile für das Nachstellen der Bremse 1 gezeigt. Ein Antrieb 50 umfasst einen Stator 51, der über Flansche an dem Gehäuse der Bremse festlegbar ist. Zu dem Stator 51 sind Versorgungsleitungen 52 geführt und der Stator 51 ist von einem topfförmigen Rotor 53 umgeben.

An dem Rotor 53 ist eine Kupplung 60 montiert, die über eine Feder 55 gegen den Rotor 53 vorgespannt ist. Die Feder 54 ist an der gegenüberliegenden Seite an eine Hülse 56 abgestützt, die wiederum axial feststehend gelagert ist.

Die Kupplung 60 ist mit einer Welle 55 gekoppelt, die mit einem Getriebe 57 verbunden ist. Das Getriebe 57 ist an einer Platte 58 angeordnet, die an der Bremse 1 montiert ist. Das Getriebe 57 wirkt über mehrere Zahnräder auf ein Drehelement 59, das mit der Stellspindel 15 der Nachstellvorrichtung gekoppelt ist. Durch ein Drehen des Antriebes 50 ist es somit möglich, dass über die Welle 55, das Getriebe 57 und das Drehelement 59 eine Drehung der Nachstellmutter 15 zur Veränderung des Lüftspiels an der Scheibenbremse vorgenommen wird.

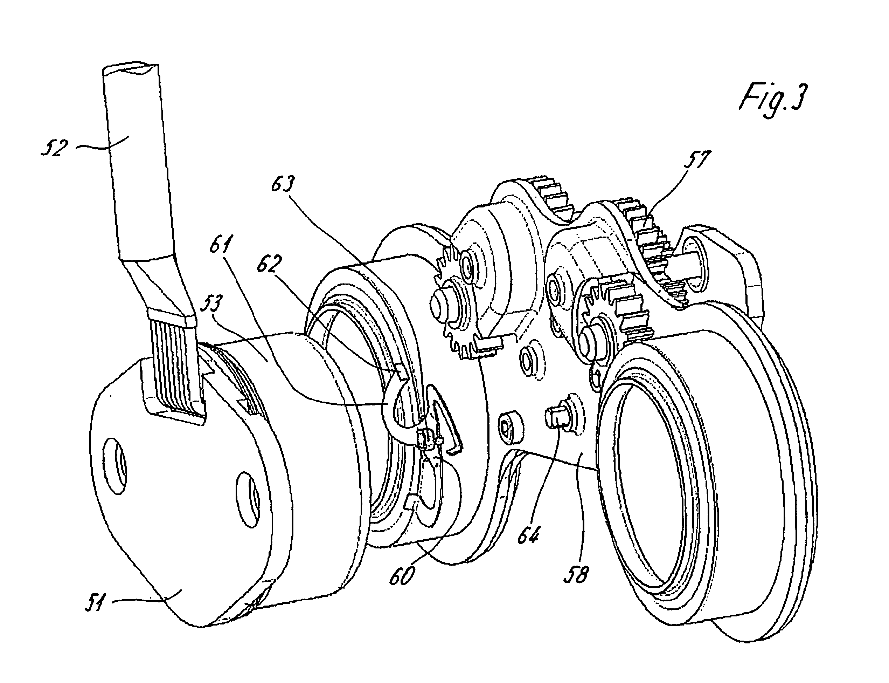

In Figur 3 ist die Kupplung 60 in einer Explosionsdarstellung gezeigt. Die Kupplung 60 umfasst drei in radiale Richtung hervorstehende Arme 61, wobei "in radialer Richtung" Ausführungsformen einschließt, bei denen die Arme 61 zusätzlich gekrümmt oder schräg verlaufend ausgebildet sind. An den Enden der Arme 61 sind abgekantete Vorsprünge 62 ausgebildet, die in Schlitze 65 an dem Rotor eingreifen können. Mittig weist die Kupplung 60 eine Aufnahme 63 auf, die auf einen Zapfen 64 aufsteckbar ist, der mit dem Getriebe 57 gekoppelt ist.

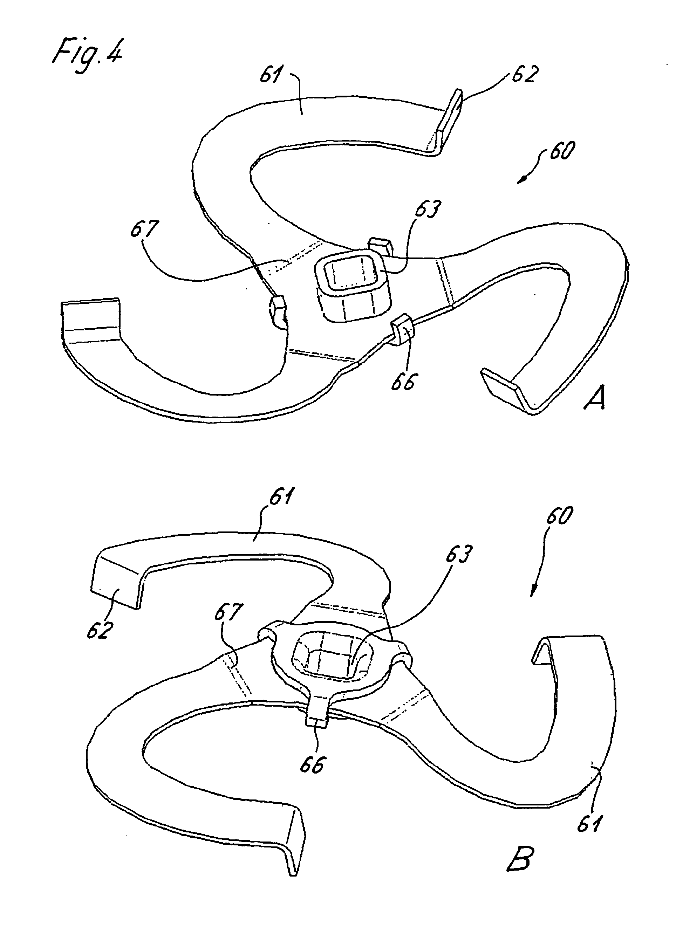

In den Figuren 4A und 4B ist die Kupplung 60 im Detail dargestellt. Die verstärkt ausgebildete Aufnahme 63 ist an der Kupplung 60 aufgesteckt, wobei die Kupplung 60 im wesentlichen aus einer metallischen Platte ausgestanzt und gebogen sein kann. Auch eine Herstellung aus Kunststoff ist möglich. Die Arme 61 sind mit einer leichten Knicklinie 67 versehen, sodass die Arme 61 in Richtung der Vorsprünge 62 leicht schräg geneigt ausgebildet sind, sodass die Arme 61 eine gewisse Federelastizität aufweisen, wenn sie gegen den Rotor 53 gedrückt werden.

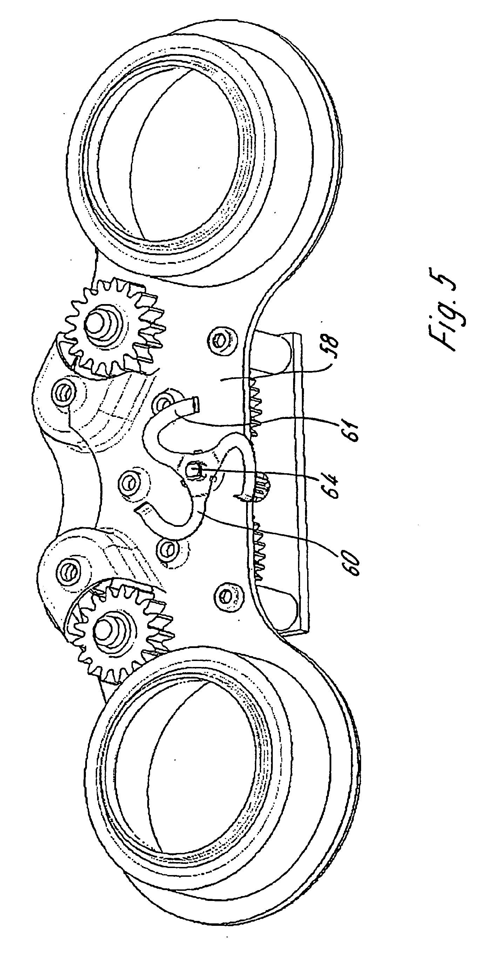

In Figur 5 ist die Kupplung 60 im montierten Zustand gezeigt, wobei die Aufnahme 63 auf den Zapfen 64 aufgesteckt ist. Die Kupplung 60 kann bei der Montage die Aufgabe eines Axiallagers übernehmen, indem eine Axialkraft bzw. Federkraft der Kupplung auf den Rotor 53 des Antriebes 50 ausgeübt wird. Dadurch kann die Lagerung des Rotors 50 vereinfacht werden, da der Rotor 50 in seiner Lagerung nur noch in einer Richtung abgestützt werden muss. Daher vereinfacht sich auch die Montage des Motors. Der Rotor 53 kann somit einfach auf das Motorlager aufgesteckt werden. Die Magnetkräfte des Rotors 53 verhindern ein Auseinanderfallen der Einheit bis zur entgültigen Montage des Motors der Kupplung 60. Die Reaktionskraft der Federkraft der Kupplung 60 wird von dem Getriebe aufgenommen.

Sollten die Vorsprünge 62 bei der Montage nicht in die Schlitze bzw. Vertiefungen 64 an dem Rotor eingefügt werden, ist dies ohne Bedeutung, da aufgrund der Federelastizität der Arme 61 dennoch eine Montage möglich ist. Bei Drehen des Rotors 51 wird bei einer entsprechenden Winkelstellung ein Einrasten der Vorsprünge 62 in die Schlitze 65 vorgenommen, um ein Drehmoment zu übertragen. Ein Ausrichten der Winkelstellung erfolgt somit automatisch bei der ersten Betätigung.

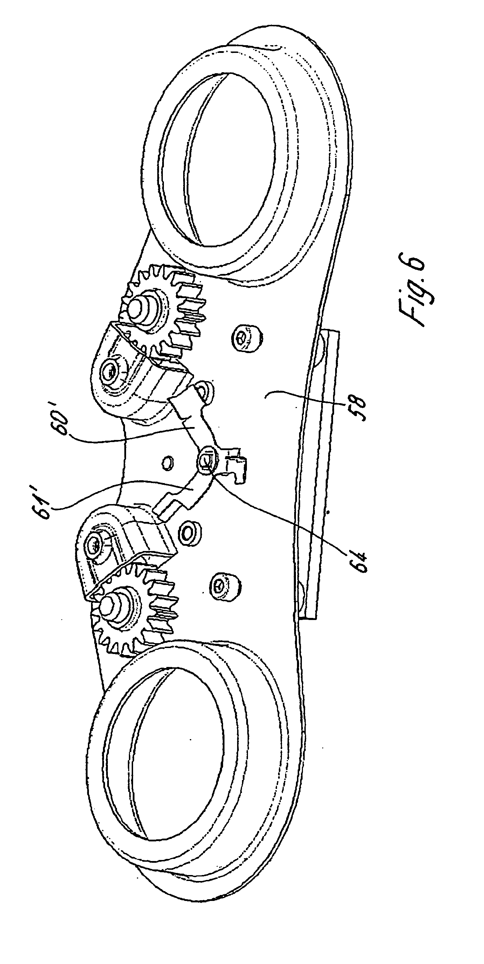

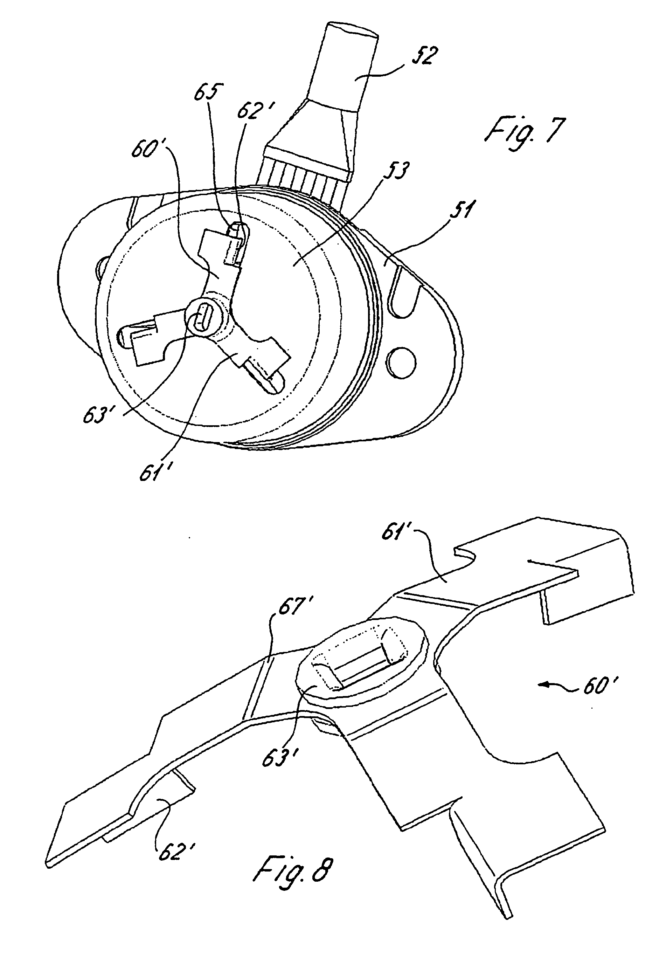

In Figur 6 ist eine weitere Ausführungsform einer Kupplung 60' gezeigt, die an der Platte 58 montiert ist und auf einen Zapfen 64 aufgesteckt ist. Die Kupplung 60' weist drei sich radial erstreckende Arme 61' auf, an denen Vorsprünge 62' ausgebildet sind. Die Vorsprünge 62' greifen in Schlitze 65 an dem Rotor 53 ein (Figur 7). In der Mitte der Kupplung 60' ist eine Aufnahme 63' zur Verbindung mit einer Welle ausgebildet.

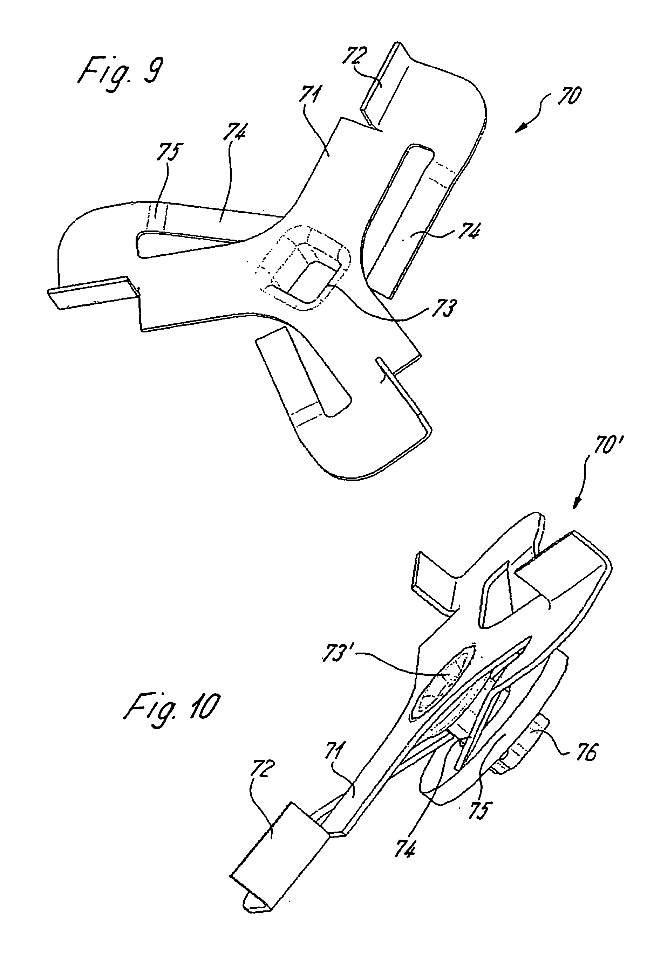

Wie in Figur 8 zu sehen ist, sind auch hier die Dreharme 61' der Kupplung 60' leicht abgeknickt ausgebildet, damit sie eine gewisse Federelastizität aufweisen. Statt einer Knickstelle 67' ist es auch möglich, die Dreharme 61' gebogen auszubilden, um eine gewisse Federelastizität zu erhalten.

In Figur 9 ist eine weitere Ausführungsform einer Kupplung 70 gezeigt, die entsprechend den vorangegangenen Ausführungsbeispielen eingebaut werden kann. Die Kupplung 70 weist drei sternförmig verlaufende Arme 71 auf, an denen abgekantete Vorsprünge 72 ausgebildet sind. An den Armen 71 sind ferner nach hinten, also in die gegenüberliegende Richtung zu den Vorsprüngen 72 hervorstehende Federelemente 74 ausgebildet, die es ermöglichen, dass die Kupplung 70 gegen den Rotor 53 vorgespannt wird. In der Mitte der Kupplung 70 ist wiederum eine Aufnahme 73 zur Verbindung mit einer Welle ausgebildet.

In Figur 10 ist eine weitere Ausführungsform einer Kupplung 70' gezeigt, die ähnlich zu der Ausführungsform der Figur 9 drei Arme 71 aufweist, die mit jeweiligen Vorsprüngen 72 sowie Federelementen 74 ausgerüstet ist. Um die Aufnahme 73' herum ist ein Ring 75 vorgesehen, der auf die Federelemente 74 wirkt, sodass bei entsprechendem axialen Einbau die Kupplung 70' gegen den Rotor 53 vorgespannt werden kann.

Die Erfindung ist nicht auf die dargestellten Ausführungsbeispiele beschränkt. Es können unterschiedliche Formen von Kupplungen eingebaut werden, beispielsweise können statt der gezeigten drei Arme auch zwei oder mehr Arme vorgesehen werden. Auch der Verriegelungsmechanismus mittels Vorsprung und Schlitz kann durch andere mechanische Mittel ersetzt werden.

Ebenso ist es möglich die Vorsprünge auf der Stirnfläche des Rotors des EC-Motors anzuordnen und die Schlitze/Vertiefungen in der Kupplungsscheibe.

## Patentansprüche

1. Scheibenbremse, insbesondere für Nutzfahrzeuge, mit:
- einem eine Bremsscheibe (1) übergreifenden Bremssattel (3);
- einer im Bremssattel (3) angeordneten pneumatisch oder elektromotorisch betätigbaren Zuspannvorrichtung (5) zum Zuspannen der Bremse;
- wenigstens einer Nachstellvorrichtung (15) zum Ausgleich von Bremsbelagverschleiß durch Nachstellen des Lüftspiels der Scheibenbremse, wobei die Nachstellvorrichtung (15) über einen elektromotorischen Antrieb (50) bewegbar ist, wobei
zwischen dem Antrieb (50) und der Nachstellvorrichtung (15) eine drehmomentübertragende federelastische Kupplung (60, 70) geschaltet ist, **dadurch gekennzeichnet, dass** die Kupplung (60, 70) mittels einer Feder (54, 74) axial gegen den Antrieb (50) vorgespannt ist.

2. Scheibenbremse nach Anspruch 1, **dadurch gekennzeichnet, dass** im Kraftübertragungsweg zwischen Antrieb (50) und Nachstellvorrichtung (15) Mitnahmeelemente (62, 72) angeordnet sind, mittels denen ein Drehmoment übertragbar ist.

3. Scheibenbremse nach Anspruch 2, **dadurch gekennzeichnet, dass** die Mitnahmeelemente (62, 72) an der Kupplung (60, 70) ausgebildet sind.

4. Scheibenbremse nach einem der Ansprüche 1 bis 3, **dadurch gekennzeichnet, dass** die Kupplung (60, 70) mindestens einen sich in radiale Richtung erstreckenden federelastischen Arm (61, 71) aufweist, der am Antrieb (50) festlegbar ist, und eine über ein Getriebe (57) mit der Nachstellvorrichtung (15) gekoppelte Drehachse (55) aufweist.

5. Scheibenbremse nach Anspruch 4, **dadurch gekennzeichnet, dass** an dem mindestens einen Arm (61, 71) ein Vorsprung (62, 72) ausgebildet ist, der in einen am Antrieb (50) ausgebildeten Schlitz (65) einfügbar ist.

6. Scheibenbremse nach einem der Ansprüche 1 bis 5, **dadurch gekennzeichnet, dass** die Kupplung (60, 70) im wesentlichen plattenförmig mit mehreren sich radial erstreckenden Armen (61, 71) ausgebildet ist.

7. Scheibenbremse nach einem der Ansprüche 1 bis 6, **dadurch gekennzeichnet, dass** die Kupplung (60, 70) an einem Rotor (53) des Antriebes (50) festgelegt ist.

8. Scheibenbremse nach einem der Ansprüche 5 bis 7, **dadurch gekennzeichnet, dass** die Kuppling (60, 70) mehrere Arme (61, 71) mit hieren ausgebildeten Vorsprüngen (62, 72) aufweist, wobei die an den Armen (61, 71) der Kupplung (60, 70) ausgebildeten Vorsprünge (62, 72) in am Rotor (53) ausgebildete Schlitze (65) einfügbar sind.

9. Scheibenbremse nach einem der Ansprüche 1 bis 8, **dadurch gekennzeichnet, dass** in der Kupplung (60, 70) eine Aufnahme (63, 73) für eine mit der Nachstellvorrichtung (15) gekoppelte Welle (55) vorgesehen ist.

## Claims

1. Disc brake, in particular for commercial vehicles, with:
- a brake caliper (3) that extends across a brake disc (1);
- an application device (5) actuated pneumatically or by an electric motor for applying the brake, arranged in the brake caliper (3);
- at least one adjusting device (15) for the compensation of brake lining wear by adjusting the air gap of the disc brake, the adjusting device (15) being moved by an electric motor drive (50), such that
between the drive (50) and the adjusting device (15) there is interposed a torque-transmitting clutch (60, 70),
**characterised in that**
the clutch (60, 70) is spring-loaded axially against the drive (50) by means of a spring (54, 74).

2. Disc brake according to Claim 1, **characterised in that** in the force transmission path between the drive (50) and the adjusting device (15) are arranged carrier elements (62, 72) by means of which a torque can be transmitted.

3. Disc brake according to Claim 2, **characterised in that** the said carrier elements (62, 72) are formed on the clutch (60, 70).

4. Disc brake according to any of Claims 1 to 3, **characterised in that** the clutch (60, 70) comprises at least one elastic arm (61, 71) that extends in the radial direction, which can be attached to the drive (50) and which comprises a rotation axle (55) coupled to the adjusting device (15) by a gear system (57).

5. Disc brake according to Claim 4, **characterised in that** a projection (62, 72) is formed on the at least one arm (61, 71), which can engage with a slot (65) formed on the drive (50).

6. Disc brake according to any of Claims 1 to 5, **characterised in that** the clutch (60, 70) is essentially plate-shaped with a plurality of radially extending arms (61, 71).

7. Disc brake according to any of Claims 1 to 6, **characterised in that** the clutch (60, 70) is fixed on a rotor (53) of the drive (50).

8. Disc brake according to any of Claims 5 to 7, **characterised in that** the clutch (60, 70) has a plurality of arms (61, 71) with projections (62, 72) formed on them, such that the projections (62, 72) formed on the arms (61, 71) of the clutch (60, 70) can engage in slots (65) formed in the rotor (53).

9. Disc brake according to any of Claims 1 to 8, **characterised in that** a cut-out (63, 73) is provided in the clutch (60, 70) for a shaft (55) coupled to the adjusting device (15).

## Revendications

1. Frein à disque pour véhicules, en particulier pour véhicules utilitaires, comprenant :
- un étrier de frein (3) chevauchant un disque à frein (1);
- un dispositif de serrage de frein (3) commandable de façon pneumatique ou électrique afin de serrer le frein, qui est disposé dans ledit étrier de frein (3);
- au moins un dispositif de rattrapage (15) afin de compenser l'usure aux garnitures de frein par rattrapage du jeu d'aération dans le frein à disque, audit dispositif de rattrapage (15) étant apte à être imprimé en mouvement via une unité de commande électrique (50), dans lequel
un coupleur élastique à transmettre un couple (60, 70) est raccordé entre ladite unité de commande (50) et ledit dispositif de rattrapage (15), **caractérisé en ce que** ledit coupleur (60, 70) est mis en précontrainte, en sens axial, moyennant un ressort (54, 74) contre ladite unité de commande (50).

2. Frein à disque selon la revendication 1, **caractérisé en ce que** des éléments entraîneurs (62, 72) sont disposés dans la voie de transmission d'effort entre ladite unité de commande (50) et lesdits éléments de rattrapage (62, 72), moyennant duquel se peut faire la transmission d'un couple.

3. Frein à disque selon la revendication 2, **caractérisé en ce que** lesdits éléments entraîneurs (62, 72) sont formés audit coupleur (60, 70).

4. Frein à disque selon une quelconque des revendications 1 à 3, **caractérisé en ce que** ledit coupleur (60, 70) comprend au moins un bras élastique (61, 71) s'étendant en sens radial, qui est apte à être fixé à ladite unité de commande (50), ainsi qu'un arbre rotatif (55) accouplé, via un engrenage (57), audit dispositif de rattrapage (15).

5. Frein à disque selon la revendication 4, **caractérisé en ce qu'**une saillie (62, 72) est formé audit au moins un bras (61, 71), qui est apte à être inséré dans une fente (65) formée à ladite unité de commande (50).

6. Frein à disque selon une quelconque des revendications 1 à 5, **caractérisé en ce que** ledit coupleur (60, 70) présente une configuration essentiellement sous forme d'une plaque à plusieurs bras (61, 71) s'étendant en sens radial.

7. Frein à disque selon une quelconque des revendications 1 à 6, **caractérisé en ce que** ledit coupleur (60, 70) est fixé à un rotor (53) de ladite unité de commande (50).

8. Frein à disque selon une quelconque des revendications 5 à 7, **caractérisé en ce que** ledit coupleur (60, 70) comprend plusieurs bras (61, 71) aux saillies (62, 72) y formées, auxdits saillies (62, 72) formées auxdits bras (61, 71) dudit coupleur (60, 70) étant aptes à être inséré dans des fentes (65) formées audit rotor (53).

9. Frein à disque selon une quelconque des revendications 1 à 8, **caractérisé en ce qu'**un récepteur (63, 73) est disposé dans ledit coupleur (60, 70) afin de recevoir un arbre (55) accouplé audit dispositif de rattrapage (15).
